# EUROPEAN PATENT APPLICATION

(11) **EP 3 375 509 A1**
(43) Date of publication of application: **19.09.2018**
(21) Application number: 17020101.6
(22) Date of filing: 14.03.2017
(51) Int. Cl.: B01D 53/52, C01B 17/04, C10L 3/10, F25J 3/00

(54) **COMBINED APPLICATION OF OXYGEN ENRICHMENT AT CLAUS UNITS AND ALSO AT RESPECTIVE INCINERATOR FOR REDUCTION OF CO EMISSION**

(71) Applicant: Linde Aktiengesellschaft, 80331 München (DE)
(72) Inventor: Schreiner, Bernhard, 82041 Oberhaching (DE)
(74) Representative: Gellner, Bernd

(57) **Abstract**

The present invention relates to a process for providing elemental sulphur from a sour gas comprising hydrogen sulphide and at least one oxidizable carbon compound, wherein the process comprises the steps of: a Claus process step, wherein the sour gas is oxidized in presence of a first oxidant stream with a oxygen content of at least 21 % (v/v), wherein a part of the hydrogen sulphide is converted to sulphur dioxide, the at least one carbon compound is at least partly converted to carbon monoxide, and the sulphur dioxide is reacted with the remaining hydrogen sulphide yielding elemental sulphur and a tail gas comprising carbon monoxide, and an incineration step, wherein the tail gas is oxidized in presence of a second oxidant stream, wherein the carbon monoxide is converted to carbon dioxide, and wherein the second oxidant stream is characterized by an oxygen content of at least 21 % (v/v).

## Description

The present invention relates to a process for providing elemental sulphur from a sour gas comprising mainly hydrogen sulphide associated with less concentrated gas components like e.g. CO₂, ammonia and hydrocarbons.

Sulphur recovery units based on the so-called "Modified Claus Process" produce elemental sulphur from feed gases with high concentration of H₂S by partial oxidation of the latter, typically by using air as oxidant.

In some cases, oxygen enriched air or pure oxygen is used as the primary oxidant in the thermal Claus step - i.e. sent to the main Claus burner- in order to:
- pave way for increased throughput of H₂S feed (capacity increase)
- increase energy efficiency (due to higher steam production and less energy - i.e. steam/fuel - needed for reheating process gas),
- overcome bottlenecks which typically is realized by reduction of process gas flow, and/or
- minimize operational problems within the Claus unit caused by precipitation of ammonium salts.

One welcomed side effect of O₂ application at the thermal Claus step is a more efficient CO oxidation resp. diminution within the subsequent incinerator; this is mainly due to a prolonged residence time of the process gas in the burner chamber of the incinerator.

Down-stream of Claus units and attached Claus tail gas treating units, the desulphurized process gas has to be incinerated mainly in order to fulfill environmentally driven legislation. One main aspect here is to efficiently oxidize H₂S to SO₂. On the other hand, in many cases it is also necessary to reduce the CO content in the emitted stack gas below certain concentration thresholds.

Factors affecting the CO oxidation reaction rate are temperature, mixing of reactants and residence time. According to the state of the art, the temperature in the final incinerator is increased to speed up the CO reaction kinetics. But such temperature increase might be not applicable (e.g. due to gas flow restrictions as more fuel has to be burnt with more oxidation air to be added) or not wanted because of economic considerations. There might also be cases where this measure cannot be realized due to individual bottlenecks like e.g. a limitation of fuel or air supply.

Thus, it is the objective of present invention to provide an efficient and economically reasonable method for producing elemental sulphur from a sour gas, wherein the method is characterized by a reduced or low carbon monoxide output.

This object is solved by a method with the features of claim 1. Preferred embodiments are stated in the depended claims and described in the following.

According thereto, a process for providing elemental sulphur from a sour gas comprising hydrogen sulphide, at least one oxidizable carbon compound, particularly a hydrocarbon, and optionally sour gas associated compounds such as CO₂ and/or NH₃ is provided. The process of the invention comprises the steps of:
- a Claus process step, wherein
   - the sour gas is oxidized in presence of a first oxidant stream with an oxygen content of at least 21 % (v/v), wherein a part of the hydrogen sulphide is converted to sulphur dioxide, and the at least one oxidizable carbon compound is at least partly converted to carbon monoxide, and
   - the sulphur dioxide is reacted with the remaining hydrogen sulphide yielding elemental sulphur and a tail gas comprising carbon monoxide and optionally residual hydrogen sulphide, and
- an incineration step, wherein
   the tail gas is oxidized in presence of a second oxidant stream, wherein the carbon monoxide is converted to carbon dioxide, and optionally the residual hydrogen sulphide is converted to sulphur dioxide or to sulphur dioxide and - to a less degree - sulphur trioxide,
wherein
the second oxidant stream is characterized by an oxygen content of at least 21 % (v/v).

Particularly, the use of oxygen enriched air streams or pure oxygen as first and or second oxidant streams in the process of the invention allows the application of lower flows of both oxidant streams while maintaining the oxygen content in the Claus process step and the incineration step, wherein a low flow first oxidant stream results in a low flow of the tail gas.

Advantageously by applying a lower flow of the tail gas of the Claus process step and a lower flow of the second oxidant stream into the incineration step, the residence time of the reactants comprised within the tail gas and the second air stream is increased. By that, the reaction of carbon monoxide to carbon dioxide in the incineration step is shifted to the equilibrium, e.g. to a maximally possible conversion of carbon monoxide to carbon dioxide. Accordingly, the carbon monoxide emission of the process can efficiently be reduced.

Furthermore, the process of the invention may be applied on existing plants without structural modifications of the plants, e.g. without redesign or rebuild of the incinerator, or modifications of the incinerator operating conditions.

The term "flow" in the context of the present specification refers to the volumetric flow rate of the respective stream or gas.

In certain embodiments, the flow of the first oxidant stream is at least 10 %, 20 %, 30 %, 40 %, 50 %, 60 %, 70 % or 79 % lower compared to the flow of an air stream (non enriched) that is typically applied to the Claus process, particularly to the Claus thermal stage.

In certain embodiments, the flow of the second oxidant stream is at least 10 %, 20 %, 30 %, 40 % or 50 % lower compared to the flow of an air stream (non enriched) that is typically applied to the incineration step.

For optimal conversion of hydrogen sulphide to elemental sulphur, preferably only a part of hydrogen sulphide is oxidized. Typically, one third of the hydrogen sulphide is converted to sulphur dioxide that then reacts with the remaining two thirds of the hydrogen sulphide to form elemental sulphur. The formation of elemental sulphur via the Claus process step will take place in parallel to the oxidation reaction.

Accordingly, oxygen is delivered to the Claus process via the first oxidant stream in such an amount that the oxygen is present in the Claus process step in an understoichiometric ratio to the hydrogen sulphide to be oxidized to achieve only a partial oxidation of hydrogen sulphide.

With regard to the incineration step, oxygen is typically delivered to the incineration step via the second oxidant stream in such an amount that oxygen is present in the incineration step in an overstoichiometric ratio to the components of the tail gas to be oxidized (e.g. carbon monoxide and/or hydrogen sulphide).

Typically, the sour gas is oxidized in presence of the first oxidant stream by means of a furnace. A furnace in the context of the present specification refers to a device for combustion of flammable gases such as a sour gas containing hydrogen sulphide. The furnace may particularly include, without being restricted to, a refractory lined vessel, a combustion region, an air/oxygen and sour gas intake pipe, an exhaust vent pipe, a burner and a heat exchanger. The heat exchanger may be used to generate hot steam. The furnace is particularly designed to facilitate the method according to the invention, in particular to facilitate the oxidation of hydrogen sulphide to sulphur, particularly at temperatures above 1000 °C. Additionally, the furnace may also facilitate the reaction of hydrogen sulphide and sulphur dioxide to elemental sulphur.

During or after the thermal oxidation, the formed elemental sulphur is preferably in the gaseous phase due to the elevated temperatures. After the thermal oxidation, the sulphur may condense to liquid by lowering the temperature and can be simply removed by gravity from the sour gas, for instance. The condensing reaction may be performed in a separate vessel. Furthermore, the condensing reaction and the following removal of liquid sulphur may be repeated one or several times.

For higher strength acid gas streams (>60%vol H₂S) that could cause non-acceptably high furnace temperatures, it would be preferential to oxidize the H₂S according to a combustion method that is also called the SURE Double combustion method (in this respect, concerning details of the combustion, it is additionally referred to US 5,294,428), wherein particularly less than one third of the hydrogen sulphide of the sour gas is oxidized by highly purity oxygen in a first combustion region to form water vapor and sulphur dioxide so that elemental sulphur vapor can be produced from the reaction of the sulphur dioxide with unburnt hydrogen sulphide. In a second reaction furnace, the remaining oxygen required to control the stoichiometry of the Claus reaction is added via a lance system. By adding the oxygen via two reactions furnaces with inter-stage cooling by a steam generating waste heat boiler, the temperatures in each unit can be safely controlled. The process gas is mixed in the second reaction furnace with the remaining oxygen at a temperature of preferably >600°C and above the auto-ignition temperature of the sour gas. After the hydrogen sulphide reacts with the sulphur dioxide in at least one catalytic region, the elemental sulphur vapor is extracted. The molar ratio of hydrogen sulphide to sulphur dioxide is particularly adjusted upstream of the catalytic region by control of the oxygen addition in the second combustion region to bring the molar ratio to the stoichiometric value or to an approximation of said value. The stoichiometric value is 2 moles hydrogen sulphide and 1 mole sulphur dioxide that reacts to 3/8 moles sulphur and 2 moles water.

Accordingly, the furnace may be designed to facilitate the oxidation of hydrogen sulphide according to the SURE double combustion method described above, wherein the furnace preferably comprises a first and a second combustion region. Alternatively, a second furnace with a second combustion region is preferably connected to a first furnace with a first combustion region. In the first combustion region, preferably less than one third of the hydrogen sulphide is oxidized to sulphur dioxide. In the second combustion region, the molar ratio of hydrogen to sulphur oxide is preferably adjusted by further burning of hydrogen sulphide to sulphur dioxide to bring the molar ratio to 2 mol hydrogen sulphide and 1 mol sulphur oxide or to a ratio approximating thereto.

For lower strength sour gas streams where the H₂S concentration <60%, the oxidation of the hydrogen sulphide with high purity oxygen can be carried out in a single reaction furnace without the requirement of the SURE Double Combustion process. However, should an air stream highly enriched with oxygen (e.g. 28 % (v/v) to 45 % (v/v)) for high strength sour gas or high purity oxygen for lower strength sour gas be added to a single reaction furnace then it would be preferable to utilize a proprietary burner such as the SURE burner (as described in detail in e.g. EP 974 552, EP 1240460, and EP 1 483 199) to ensure intermit mixing of high purity oxygen and the sour gas. The limiting factor for the use of a single reaction furnace in order to achieve all the oxidation reactions is typically determined by the high temperature resistance of the refractory in the furnace. For a single reaction furnace, the adiabatic flame temperatures would typically be controlled below 1500°C, provided high temperature refractory is used in the furnace exposed to the flame.

After thermal oxidation, the process gas may be cooled to temperatures below 160 °C and already formed sulphur may be removed. Then, the process gas may be heated again and transferred to a different compartment such as a catalytic converter. In such a catalytic converter the remaining sulphur dioxide and hydrogen sulphide preferably react to sulphur in presence of a catalyst such as for instance aluminum (III) oxide or titanium (IV) oxide. The formed elemental sulphur is then preferably removed. Additional catalytic converter stages may follow. For optimizing the formation of elemental sulphur the sour gas may particularly be reheated before entering the catalytic converter.

The tail gas, i.e. the process gas exiting the Claus unit, may be sent directly to an incinerator or be sent through a deep desulphurization unit (tail gas treatment unit) before being sent to an incinerator. The incinerator's purpose is to oxidize hydrogen sulphide, carbonyl sulphide, carbon disulfide as well as sulphur vapor to SO₂ and also to oxidize CO to CO₂. The incinerator can be of the thermal (combustion temperature > 550 °C) or of the catalytic type (combustion temperature 350 - 600 °C).

In certain embodiments, the incineration step is performed at a temperature in the range of 550°C to 850°C.

In certain embodiments, the sour gas is oxidized in the Claus furnace at a temperature above 1000°C. In certain embodiments, the sour gas is oxidized at a temperature above 1100°C. In certain embodiments, the sour gas is oxidized at a temperature above 1250°C. In certain embodiments, the sour gas is oxidized at a temperature above 1300°C. In certain embodiments, the sour is oxidized at a temperature above 1400°C.

In certain embodiments, the first oxidant stream is characterized by an oxygen content in the range of 21 % (v/v) to 28 % (v/v). In certain embodiments, the first oxidant stream is characterized by an oxygen content in the range of 28 % (v/v) to 45 % (v/v).

In certain embodiments, the oxygen content of the first oxidant stream is at least 28 % (v/v). In certain embodiments, the oxygen content of the first oxidant stream is at least 45 % (v/v). In certain embodiments, the oxygen content of the first oxidant stream is at least 60 % (v/v). In certain embodiments, the oxygen content of the first oxidant stream is at least 75 % (v/v).

In certain embodiments, the sour gas is oxidized in presence of high purity oxygen.

The term "high purity oxygen" in the context of the present specification refers to oxygen with a purity of at least 90 % (v/v). By using high purity oxygen instead of an air stream enriched with oxygen as first oxidant stream, the flow of the tail gas of the Claus unit can be maximally reduced.

In certain embodiments, the high purity oxygen is provided by an air separation process. Such an air separation process may be a cryogenic distillation, wherein atmospheric air is compressed to a pressure typically between 5 and 10 bar and liquefied. The liquid air is then preferably distilled in one or often two distillation columns and separated into oxygen and nitrogen. Other air separation processes include, without being restricted to, pressure swing adsorption, vacuum pressure swing adsorption or air separation by a membrane.

In certain embodiments, the second oxidant stream is characterized by an oxygen content in the range of 21 % (v/v) to 28 % (v/v). In certain embodiments, the second oxidant stream is characterized by an oxygen content in the range of 28 % (v/v) to 45 % (v/v).

In certain embodiments, the tail gas is oxidized in the incineration step in presence of a fuel. In certain embodiments, the fuel consists of or comprises natural gas or refinery gas.

In the context of the present specification, the term "refinery gas" is used in its meaning in the art of chemistry, particularly in the art of petro chemistry; it particularly refers to gaseous by-products of mineral oil refining process and typically comprises hydrogen, methane, ethane, propane, butane, ethylene and/or propylene.

In certain embodiments, the Claus process step further comprises the removal of the elemental sulphur.

In certain embodiments, the removal of elemental sulphur comprises the steps of: the condensing of sulphur vapor to the liquid phase and the separation of the liquid sulphur from the gas phase, preferably by gravity.

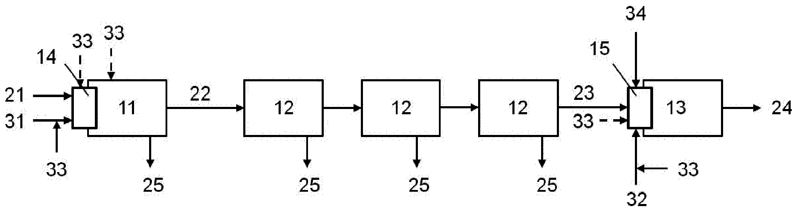

The invention is further characterized, without limitations, by the following examples, from which further features, advantages or embodiments may be derived. The examples do not limit but illustrate the invention, wherein
- Fig. 1: shows an embodiment of the process according to the invention.

### Examples:

The present invention aims to increase the residence time of the reactants 23,32,33,34 in the incinerator 13 in order to reduce the CO content in off-gases of Claus plants. This is achieved by two-fold application of O₂ enrichment, i.e. (first) at the thermal Claus stage 11 far upstream of the incinerator 13 and (second) at the incinerator stage 13 at the back end of the Claus unit. O₂ enrichment means that the flow of process air 31, 32 can be lowered although the O₂ content is kept at the same level. Less total flow means increased residence time of the process gas 21, 31, 33 in the thermal Claus section as well as in all downstream sections including the incinerator 13. Thus, O₂ enrichment at the front end 11 and also at the back end 13 of a Claus unit enhance the residence time of the reactants 23,32,33,34 in the incinerator 13 two-fold and thereby shifts the reaction to equilibrium yielding a reduced CO content.

Trial operations with O₂ enrichment plus corresponding decrease of process air have confirmed that front end application of O₂ enrichment - i.e. in the Claus furnace 14 - has already an impact on the CO oxidation efficiency within the incinerator 13 (far downstream of O₂ application). In particular it was observed that without changing incinerator conditions (esp. incinerator temperature from approx. 600°C to 850°C) the total amount of CO emissions can be reduced.

Fig. 1 illustrates a preferred embodiment of the process of the invention. In the Claus thermal step 11, a sour gas 21 with a hydrogen sulphide content of typically 40-95 % (v/v) is mixed and reacted with a first air stream 31 enriched with oxygen 33 by means of a burner 14 (e.g. a BOC SURE burner). The first air stream 31 is enriched with oxygen 33 such that the first air stream 31 comprises at least 21 % (v/v) oxygen, preferable in the range of 21 % (v/v) and 28 % (v/v) oxygen or in the range of 28 % (v/v) and 45 % (v/v). For the latter range, it is necessary to inject oxygen 33 directly into the furnace chamber 11 or the burner 14. Alternatively, i.e. in case of comparably low H₂S concentration in the sour gas 21, it may be reacted with high-purity oxygen 33 instead of the oxygen-enriched air stream 31. In case of that the sour gas 21 comprises a higher concentration of hydrogen sulphide (e.g. >60 % (v/v)), the application of a double combustion system, e.g. the SURE Double Combustion, may be necessary.

The sour gas 21 typically also comprises oxidizable carbon compounds such as methane or other higher hydrocarbons. These hydrocarbons are oxidized in the Claus thermal stage 11 to carbon dioxide and carbon monoxide.

Typically, one third of the hydrogen sulphide is converted to sulphur dioxide in the Claus thermal step 11. Parallel to the oxidation, hydrogen sulphide and sulphur dioxide already reacts to elemental sulphur 25 in the Claus thermal step 11. The remaining hydrogen sulphide and sulphur dioxide is further processed in the Claus catalytic stage 12, wherein both reactants further are converted to elemental sulphur 25.

The Claus process 11, 12 is usually performed in a Claus unit consisting essentially of a furnace 11 representing the thermal section of the Claus unit, wherein the hydrogen sulphide is oxidized by means of molecular oxygen 31, 33, and at least one catalytic converter 12 representing the catalytic section 12, wherein the converter 12 is a reactor designed to facilitate the reaction of hydrogen sulphide and sulphur oxide to elemental sulphur 25. The converter 12 can comprise a bed containing catalyst such as aluminum oxide or titanium oxide. One or two additional catalytic converters 12 are typically connected to a first catalytic converter 12. Before entering the catalytic converter 12, the process gas 22 comprising hydrogen sulphide and sulphur dioxide may be reheated above 200 °C by suitable means for heating such as a heat exchanger. The formation of elemental sulphur 25 may, to a certain degree, already take place in parallel to the oxidation reaction 11 in the furnace 11.

The elemental sulphur 25 can be removed in a condenser, wherein the sulphur vapor 25 condenses to liquid sulphur 25 at typical temperatures in the range of 125 -160 °C. Additionally, a condenser can be arranged between the furnace 11 and the catalytic converter 12.

The residual components of the Claus process leave the Claus unit 11, 12 as a tail gas 23 comprising residual hydrogen sulphide and carbon monoxide. To get rid of the aforementioned components of the tail gas 23, the tail gas 23 is mixed and reacted with a second airstream 32 enriched with oxygen 33 by means of a burner 15 in an incineration step 13, wherein hydrogen sulphide is oxidized to sulphur dioxide and trioxide, and carbon monoxide to carbon dioxide. Also the second air stream 32 is particularly such enriched with high purity oxygen that the second air stream comprises at least 21 % (v/v) oxygen, preferable in the range of 21 % (v/v) and 28 % (v/v) oxygen.

Accordingly, the concept of the invention of increasing the residence time of the components of the tail gas 23 and the second air stream 32 to achieve a maximally conversion of carbon monoxide to carbon monoxide is realized by application of a low flow rate of the first air stream 31 resulting in a low flow of the tail gas 23 and a low flow rate of the second air stream 32, while maintain the oxygen levels are maintained in both the Claus thermal stage 11 and the incineration step 13 by enriching or replacing the respective air stream by high-purity oxygen stream. Advantageously, the process may be applied to existing Claus units without modification of the Claus stages and/or the incineration stage, which can additionally be run with their original parameters.

**Reference numerals:**

| | |
|---|---|
| 11 | Claus thermal stage/Claus furnace |
| 12 | Claus catalytic stage/catalytic converter |
| 13 | incineration step/incinerator |
| 14 | Claus burner |
| 15 | incineration burner |
| | |
| 21 | sour gas (H₂S+ Cₓ) |
| 22 | Claus thermal stage off-gas (SO₂ + H₂S) |
| 23 | Claus tail-gas (CO + H₂S) |
| 24 | Incineration stack gas (CO₂ + SO₂ +SO₃) |
| 25 | elemental sulphur |
| | |
| 31 | first air stream |
| 32 | second air stream |
| 33 | (high purity) oxygen |
| 34 | fuel (e.g. natural gas) |

## Claims

1. Process for providing elemental sulphur from a sour gas comprising hydrogen sulphide and at least one oxidizable carbon compound, wherein said process comprises the steps of:
- a Claus process step (11,12), wherein
• said sour gas (21) is oxidized (11) in presence of a first oxidant stream (31, 33) with an oxygen content of at least 21 % (v/v), wherein a part of said hydrogen sulphide is converted to sulphur dioxide, and said at least one oxidizable carbon compound is at least partly converted to carbon monoxide, and
• said sulphur dioxide is reacted (11,12) with the remaining hydrogen sulphide yielding elemental sulphur (25) and a tail gas (23) comprising carbon monoxide and optionally residual hydrogen sulphide, and
- an incineration step (13), wherein
said tail gas (23) is oxidized in presence of a second oxidant stream (32, 33), wherein said carbon monoxide is converted to carbon dioxide, and optionally said residual hydrogen sulphide is converted to sulphur dioxide and/or sulphur trioxide,
**characterized in that**
said second oxidant stream (32, 33) is **characterized by** an oxygen content of at least 21 % (v/v).

2. The process according to claim 1, **characterized in that** said first oxidant stream (31) and/or said second oxidant stream (32) are an air stream enriched with oxygen (33).

3. The process according to claim 1 or 2, **characterized in that** said incineration step (13) is performed at a temperature in the range of 550°C to 850°C.

4. The process according to any one of the preceding claims, **characterized in that** said sour gas (21) is oxidized at a temperature above 1000 °C, particularly above 1100 °C.

5. The process according to any one of claims 1 to 4, **characterized in that** said first oxidant stream (31) is **characterized by** an oxygen content in the range of 21 % (v/v) to 28 % (v/v).

6. The process according to any one of claims 1 to 4, **characterized in that** said first oxidant stream (31) is **characterized by** an oxygen content in the range of 28 % (v/v) to 45 % (v/v).

7. The process according to any one of the claim 1 to 4, **characterized in that** said first oxidant stream (31) is **characterized by** an oxygen content of at least 28 % (v/v), 45 % (v/v), 60 % (v/v) or 75 % (v/v).

8. The process according to any one of the claims 1 to 4, **characterized in that** said first oxidant stream consists of high purity oxygen (33).

9. The process according to any one of the preceding claims, **characterized in that** said second oxidant stream (32) is **characterized by** an oxygen content in the range of 21 % (v/v) to 28 % (v/v).

10. The process according to any one of the preceding claims, **characterized in that** said tail gas (23) is oxidized in said incineration step (13) in presence of a fuel (34), preferably natural gas or refinery gas.
